# FASCICULE DE BREVET EUROPEEN

(11) **EP 1 589 184 B1**
(45) Date de publication et mention de la délivrance du brevet: **22.08.2012**
(21) Numéro de dépôt: 05300308.3
(22) Date de dépôt: 22.04.2005
(51) Int. Cl.: E06B 9/174, F16B 9/02

(54) **Volet roulant comportant un dispositif de blocage axial d'un tronçon d'axe emboité dans une joue support**
Rolladen mit einer Axialblockiereinrichtung einer in einen Stützflansch hineinandergreifenden Achsensektion
Roller blind comprising a device for axial blocking of an axle section encased in a support wing

(30) Priorité: 23.04.2004 FR 0404318
(43) Date de publication de la demande: 26.10.2005
(73) Titulaire: BUBENDORFF Société Anonyme, 68220 Attenschwiller (FR)
(72) Inventeur: BUBENDORF, Robert, 68220, ATTENSCHWILLER (FR)
(74) Mandataire: Rhein, Alain

(56) Documents cités:
- DE-A- 2 636 764
- DE-C- 920 378
- FR-A- 2 830 044
- GB-A- 1 050 202
- GB-A- 2 158 544
- US-A- 4 063 836

## Description

L'invention a trait à un volet roulant comportant un tube d'enroulement de tablier, dont une extrémité est montée en rotation sur un tronçon d'axe rendu solidaire d'une joue support.

La présente invention trouvera son application dans le domaine des volets roulants.

D'une manière habituelle, un volet roulant pour porte, fenêtre ou analogue, comporte un arbre sur lequel et duquel s'enroule et se déroule un tablier constitué par une juxtaposition de lames reliées les unes aux autres à l'aide de moyens d'articulation appropriés. Cet arbre d'enroulement dudit tablier est monté en rotation sur des tronçons d'axe qui se présentent saillants à ses extrémités et sont fixés sur des joues supports. Ces joues peuvent être rapportées sur la maçonnerie ou encore sur l'extrémité supérieure de coulisses contribuant au guidage du tablier lors des déplacements.

Sur l'une des extrémités d'un tel arbre d'enroulement sont montés, en outre, les moyens d'entraînement en rotation qui peuvent être du type manuel, tels qu'une poulie, un treuil ou analogue, ou encore du type à commande électrique. Tout particulièrement, il est connu, pour l'entraînement de tels volets roulants, des moteurs tubulaires qui sont engagés dans cette extrémité de l'arbre d'enroulement en vue d'assurer la rotation par l'intermédiaire de moyens de transmission appropriés. En fait, la présence même de tels moyens d'entraînement, quelles que soient leurs caractéristiques, fait en sorte que la cote, entre la joue support et l'extrémité, proprement dite, de l'arbre d'enroulement, est figée. Toutefois, la distance séparant deux joues supports est, elle, susceptible de varier en fonction des contraintes rencontrées au moment même de la pose du volet roulant. C'est pour cela que, très souvent, le tronçon d'axe, sur lequel est monté en rotation l'arbre d'enroulement, à son extrémité opposée aux moyens d'entraînement, est du type télescopique. Plus précisément, la longueur saillante de ce tronçon d'axe par rapport à l'extrémité de l'arbre d'enroulement est ajustable, permettant, ainsi, de rattraper les différences dimensionnelles rencontrées.

Ce montage télescopique d'un tel tronçon d'axe sur lequel est monté en rotation l'arbre d'enroulement du volet roulant, présente également un autre intérêt, à savoir qu'il facilite considérablement la pose dudit volet roulant. En effet, on peut de ce fait envisager un emboîtement axial de l'ensemble du mécanisme sur les joues supports préalablement fixées sur la maçonnerie ou autre.

A ce propos la fixation de l'extrémité libre d'un tel tronçon d'axe sur une joue support s'effectue essentiellement de la manière suivante : cette extrémité libre du tronçon d'axe, constitué substantiellement par un tube, est soit positionnée dans un berceau, soit engagée dans une douille équipant la joue support. L'extrémité du tube définissant ce tronçon d'axe comporte, de manière diamétralement opposée, des ouvertures que l'on vient positionner au droit d'ouvertures ménagées au niveau du berceau ou de ladite douille en vue d'engager une goupille que l'on vient insérer dans les ouvertures traversant l'extrémité du tronçon d'axe.

Le problème que pose un tel montage s'observe plus particulièrement dans le cas d'un entraînement motorisé du volet roulant. En effet, l'obstruction procurée par la goupille, immobilisant en translation et en rotation par rapport à la joue support le tronçon d'axe situé à l'extrémité de l'arbre d'enroulement, opposée par rapport aux moyens moteurs, empêche l'aménagement de toute commande de secours. Aussi il est très fréquent de ne pas équiper, pour ces raisons, un volet roulant motorisé de moyens d'entraînement de secours.

Le brevet européen EP 0 730 080 apporte une solution aux problèmes posés sous la forme d'organes de retenue situés sur le tronçon d'axe et sur un embout tubulaire placé sur la joue support. Ledit embout tubulaire comporte un alésage ajusté au diamètre dudit tronçon d'axe, lui permettant de recevoir la partie d'extrémité de ce dernier. Lesdits organes de retenue dudit tronçon d'axe se présentent sous forme de languettes s'étendant radialement en périphérie de ladite partie d'extrémité dudit tronçon d'axe et sont conçus aptes à coopérer avec des alésages prévus dans ledit embout tubulaire dans le but d'assurer le blocage en rotation dudit tronçon d'axe par rapport audit embout tubulaire. Lesdits organes de retenue dudit embout tubulaire se présentent sous formes d'ergots s'étendant radialement par rapport à l'axe dudit embout. Une goupille de type «circlips» se positionne afin de verrouiller lesdits organes de retenue du tronçon d'axe et de l'embout tubulaire, permettant un blocage axial dudit tronçon d'axe par rapport audit embout tubulaire.

Cette solution comporte les inconvénients de posséder une goupille difficile d'accès et à positionner lors du montage ou du démontage dudit volet roulant. Cette goupille amovible et indépendante peut aussi être égarée lors du démontage du volet roulant. De surcroît, un tel dispositif complique la structure de la pièce constituant l'embout tubulaire destiné à recevoir le tronçon d'axe, augmentant ainsi le temps et les coûts de fabrication.

Il est encore connu par le document FR 2 830 044, considéré comme l'état de la technique la plus pertinent, un dispositif de fixation d'un arbre de volet roulant, présentant une extrémité montée en rotation sur un tronçon d'axe télescopique de section parallélépipédique conçu pour venir s'engager dans une découpe de forme complémentaire dans une joue support.

Des moyens de blocage axial amovibles préviennent le dégagement dudit tronçon d'axe télescopique par rapport à cette joue support. Ces moyens de blocage axial sont constitués par une encoche ménagée au niveau de l'une des faces du tronçon d'axe de manière apte à coopérer avec une languette ménagée en saillie sur un des côtés de la découpe parallélépipédique dans la joue support.

Ces moyens de blocage axial sont encore complétés par une goupille que l'on vient engager, à l'arrière de la joue support, dans un orifice ménagé sur une des faces du tronçon d'axe.

Le démontage de ce tronçon d'axe n'est possible qu'après avoir retiré cette goupille qui, là encore est susceptible d'être égarée et, qui plus est, n'est accessible que du côté de la joue opposé au tube d'enroulement du tablier de volet roulant. Or, un tel accès n'est pas systématiquement possible. En particulier, cette solution ne peut être adoptée si seule une intervention entre les joues supports n'est possible après installation du volet roulant au niveau d'une construction.

Le but de la présente invention est de palier les inconvénients de l'art antérieur.

Ainsi, l'invention concerne un volet roulant comportant un tube d'enroulement de tablier, dont une extrémité est montée en rotation sur un tronçon d'axe conçu apte à être emboîté dans une joue support et immobilisé axialement par rapport à cette dernière par un dispositif de blocage axial, caractérisé par le fait que ledit dispositif de blocage axial est constitué par un organe de blocage conçu apte à être engagé dans ledit tronçon d'axe, et comprenant :
- des moyens d'accrochage escamotables susceptibles d'être rappelés élastiquement dans une position de blocage dans laquelle ils se présentent saillants en périphérie et à l'extrémité dudit tronçon d'axe pour coopérer avec un côté de ladite joue support ;
- et des moyens de commande de déblocage pour repousser lesdits moyens d'accrochage dans une position effacée par rapport à la périphérie dudit tronçon d'axe et autoriser le dégagement de ce dernier de ladite joue support ;
- lesdits moyens de commande de déblocage sont conçus de manière à être accessibles en périphérie du tronçon d'axe, du côté de la joue support opposé à celui avec lequel sont définis apte à coopérer les moyens d'accrochage.

Selon une particularité de l'invention, les moyens de commande de déblocage sont conçus aptes pour être accessibles, notamment au travers d'ouvertures adaptées, en périphérie dudit tronçon d'axe.

Les avantages découlant de la présente invention consistent en ce que pour déboîter l'arbre d'enroulement d'un volet roulant par rapport à une joue support, il suffit d'agir sur les moyens de commande de déblocage facilement accessibles en périphérie du tronçon d'axe qui maintient emboîtée une extrémité de ce tube d'enroulement dans ladite joue support. A ce moment là, les moyens d'accrochage escamotables sont rendus inactifs et ce tronçon d'axe peut être déboîté de ladite joue support. A noter d'ailleurs à ce propos, que de manière avantageuse, le tube d'enroulement est monté télescopique sur ce tronçon d'axe autorisant une mobilité relative de l'un par rapport à l'autre au cours de cette opération de déboîtement.

La présente invention sera mieux comprise à la lecture de la description qui va suivre, se rapportant à des exemples de réalisation illustrés dans les dessins joints en annexe :
La figure 1 est une représentation schématisée d'un volet roulant auquel s'applique le dispositif de liaison selon l'invention ;
La figure 2 est une représentation schématisée partielle et en coupe d'un tronçon d'axe emboîté sur une joue support et immobilisé axialement par rapport à cette dernière par un dispositif de blocage axial selon l'invention, ce dispositif étant illustré, ici, dans une position active ;
La figure 3 illustre, de manière schématisée, l'organe de blocage de ce dispositif avant engagement dans le tronçon d'axe conçu tubulaire à cet effet ;
La figure 4 représente ce dispositif de blocage axial dans une position qui est celle occupée en cours de déboîtement du tronçon d'axe par rapport à la joue support, les moyens d'accrochage escamotables de l'organe de blocage étant repoussés en position inactive ;
La figure 5 représente un mode de réalisation simplifiée de l'organe de blocage selon l'invention ;
La figure 6 représente encore une autre forme de réalisation de ce dispositif de blocage axial selon l'invention, cette figure 6 s'apparentant à la figure 2 ci-dessus ;

Dans la suite de la description, on se référera aux figures des dessins ci-joints.

Plus particulièrement, la présente invention concerne le domaine des volets roulants.

Un tel volet roulant 1 comporte un tube d'enroulement 2 d'un tablier 3, ce tube d'enroulement 2 étant maintenu, à ses extrémités 4, par des joues supports 5, l'ensemble prenant habituellement position dans un caisson 6.

Si, à l'une des extrémités, le tube d'enroulement 2 peut être rendu solidaire d'une joue support 5 par l'intermédiaire de moyens d'entraînement, tels qu'un moteur tubulaire 7, à son extrémité opposée, ce tube d'enroulement 2 peut être simplement monté en rotation sur un tronçon d'axe 8 emboîté dans une telle joue support 5.

Celle-ci comporte un logement sous forme d'une ouverture 9 dans laquelle peut être engagée l'extrémité saillante 10, par rapport au tube d'enroulement 2, dudit tronçon d'axe 8.

Pour permettre cet emboîtement dans l'ouverture 9 dans la joue support 5, mais également en vue d'autoriser le démontage du tube d'enroulement 2, ce dernier peut être monté libre en rotation, mais également en translation sur le tronçon d'axe 8. En somme, celui-ci est télescopique à cette extrémité 4 dudit tube d'enroulement 2.

A l'inverse, en raison de cette mobilité relative suivant la direction axiale du tube d'enroulement 2 par rapport au tronçon d'axe 8, celui-ci doit pouvoir être immobilisé au moins dans le sens axial par rapport à la joue support 5 une fois emboîté dans cette dernière.

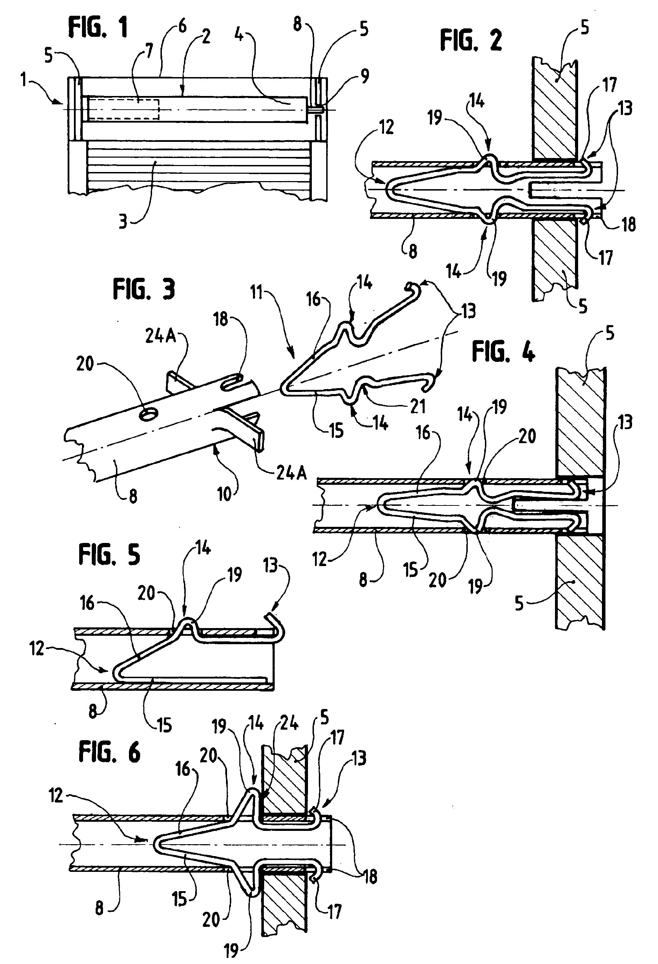

L'invention concerne, précisément, un dispositif de blocage axial 11, représenté sur la figure 3, susceptible de remplir cette fonction.

De manière particulière, ce dispositif 11 est défini par un organe de blocage 12 conçu apte à être engagé dans l'extrémité 10, saillante par rapport au tube d'enroulement 2, du tronçon d'axe 8 défini de type tubulaire.

De plus, selon l'invention, cet organe de blocage 12 comporte des moyens d'accrochage escamotables 13 susceptibles d'être rappelés élastiquement dans une position de blocage, notamment visible dans les figures 2 et 6. Dans cette position les moyens d'accrochage escamotables 13 se présentent saillants en périphérie et à l'extrémité 10 dudit tronçon d'axe 8, pour coopérer avec le côté de la joue support 5 opposé au tube d'enroulement 2.

De plus, cet organe de blocage 12 comporte des moyens 14 de commande de déblocage permettant de repousser lesdits moyens d'accrochage escamotables 13 dans une position effacée par rapport à la périphérie dudit tronçon d'axe 8 pour autoriser le dégagement de ce dernier de la joue support 5. Cela est plus particulièrement représenté dans la figure 4.

Selon un mode de réalisation préférentiel, l'organe de blocage 12 se présente sous forme d'une épingle en V constituée d'une matière non rigide et à mémoire de forme lui conférant les caractéristiques d'un ressort.

Ainsi, cet organe de blocage 12 en forme d'épingle peut être réalisé par un fil métallique, en matière plastique ou en matière composite.

Il est conçu pour que les deux branches 15, 16 définies au travers de sa forme en V soient sous contrainte élastique en s'écartant de leur position de blocage en direction de leur position de déblocage.

Ces moyens d'accrochage escamotables 13 sont définis par au moins une extrémité 17 repliée en forme de crochet d'une des branches 15, 16 de l'organe de blocage 12, comme visible dans la figure 5.

Plus particulièrement, dans la position de blocage, cette extrémité en forme de crochet 17 de la ou des branches 15, 16 est orientée de manière à se présenter saillante par rapport à la périphérie du tronçon d'axe 8. De plus il emprunte la forme d'un redan de manière apte à s'effacer naturellement en direction du centre du tronçon d'axe 8 lors de l'engagement de ce dernier dans la joue support 5 et, au contraire, former butée dans une direction de déplacement inverse.

De manière avantageuse, ces extrémités en forme de crochets 17 des branches 15, 16 sont aptes à traverser des ouvertures ou découpes 18 ménagées dans l'extrémité 10 dudit tronçon d'axe 8.

Quant aux moyens de commande de déblocage 14 que comporte l'organe de blocage 12, ils sont conçus de manière à être accessibles en périphérie de ce tronçon d'axe 8 du côté de la joue support 5 opposé à celui avec lequel sont définis apte à coopérer les moyens d'accrochage 13.

Selon un premier exemple de réalisation, ces moyens de commande de déblocage 14 consistent, au moins au niveau de la branche 15, 16 terminée en forme de crochets 17, par un bossage 19 conçu à même de traverser une ouverture 20 adaptée dans le tronçon d'axe 8 de manière, précisément, à se présenter saillant en périphérie de ce dernier.

A noter à ce propos, que cette hauteur saillante du bossage 19 par rapport au tronçon d'axe 8 est déterminée en fonction de la compression à exercer pour ladite branche 15, 16 pour repousser les moyens d'accrochage escamotables 13, depuis la position de blocage, dans une position effacée.

Dans le mode de réalisation illustré dans la figure 6, lesdits moyens de commande de déblocage 14 sont encore définis de manière à concevoir, en périphérie du tronçon d'axe 8, une butée de retenue 24 contribuant, en coopération avec les moyens d'accrochage escamotables 13 à immobiliser, axialement, le tronçon d'axe 8 par rapport à la joue support 5.

Tout particulièrement, lesdits moyens d'accrochage escamotables 13 et les moyens de commande de déblocage 14 sont alors aptes à agir, en opposition, de part et d'autre sur la joue support 5.

Toutefois, dans le mode de réalisation visible, notamment dans les figures 2 et 3, c'est le tronçon d'axe 8 lui-même qui comporte en périphérie une telle butée de retenue 24A qui, agissant en coopération avec les moyens d'accrochage escamotables 13 assure une immobilisation axiale bi-directionnelle du tronçon d'axe 8 par rapport à la joue support 5.

Une telle butée de retenue 24A peut être définie par une ou plusieurs languettes s'étendant en périphérie dudit tronçon d'axe 8. Elles sont conçues par découpage à l'extrémité 10 de ce dernier.

## Revendications

1. Volet roulant comportant un tube d'enroulement (2) de tablier (3), dont une extrémité est montée en rotation sur un tronçon d'axe (8) conçu apte à être emboîté dans une joue support (5) et immobilisé axialement par rapport à cette dernière par un dispositif de blocage axial (11), **caractérisé par le fait que** ledit dispositif de blocage axial (11) est constitué par un organe de blocage (12) conçu apte à être engagé dans ledit tronçon d'axe (8), et comprenant :
- des moyens d'accrochage escamotables (13) susceptibles d'être rappelés élastiquement dans une position de blocage dans laquelle ils se présentent saillants en périphérie et à l'extrémité dudit tronçon d'axe (8) pour coopérer avec un côté de ladite joue support (5) ;
- et des moyens de commande de déblocage (14) pour repousser lesdits moyens d'accrochage (13) dans une position effacée par rapport à la périphérie dudit tronçon d'axe (8) et autoriser le dégagement de ce dernier de ladite joue support (5);
- lesdits moyens de commande de déblocage (14) sont conçus de manière à être accessibles en périphérie du tronçon d'axe (8), du côté de la joue support (5) opposé à celui avec lequel sont définis apte à coopérer les moyens d'accrochage escamotables (13).

2. Volet roulant selon la revendication 1, **caractérisé en ce que** lesdits moyens de commande de déblocage (14) sont conçus pour être accessibles, au travers d'au moins une ouverture adaptée (20), en périphérie dudit tronçon d'axe (8).

3. Volet roulant selon les revendications 1 ou 2, **caractérisé en ce que** l'organe de blocage (12) se présente sous forme d'une épingle en V comportant deux branches (15, 16) et constituée d'une matière non rigide et à mémoire de forme lui conférant les caractéristiques d'un ressort.

4. Volet roulant selon la revendication 3, **caractérisé en ce que** ledit organe de blocage (12) en forme d'épingle est réalisé par un fil métallique, en matière plastique ou en matière composite.

5. Volet roulant selon l'une des revendications 3 ou 4, **caractérisé en ce que** lesdits moyens d'accrochage escamotables (13) sont définis par au moins une extrémité (17) repliée en forme de crochet d'une des branches (15, 16) de l'organe de blocage (12) et définie apte, en position de blocage, à se présenter saillante par rapport à la périphérie du tronçon d'axe (8).

6. Volet roulant selon l'une quelconque des revendications 3 à 5, **caractérisé en ce que** lesdits moyens de commande de déblocage (14) consistent, au moins au niveau de la branche (15, 16) terminée en forme de crochet (17), par un bossage (19) conçu à même de traverser une ouverture (20) adaptée dans le tronçon d'axe (8) de manière à se présenter saillant en périphérie de ce dernier.

7. Volet roulant selon l'une quelconque des revendications précédentes, **caractérisé en ce que** lesdits moyens de commande de déblocage (14) sont définis de manière à concevoir, en périphérie du tronçon d'axe (8), une butée de retenue (24) contribuant, en coopération avec les moyens d'accrochage escamotables (13) à immobiliser, axialement, le tronçon d'axe (8) par rapport à la joue support (5).

8. Volet roulant selon l'une des revendications précédentes, **caractérisé en ce que** ledit tronçon d'axe (8) comporte en périphérie une butée de retenue (24A) qui, agissant, en coopération avec lesdits moyens d'accrochage escamotables (13), assure une immobilisation axiale bi-directionnelle du tronçon d'axe (8) par rapport à la joue support (5).

9. Volet roulant selon l'une des revendications précédentes, **caractérisé en ce que** ledit tronçon d'axe (8) comprend au moins une ouverture (18) conçue apte à recevoir lesdits moyens d'accrochage escamotables (13).

## Claims

1. Roller blind comprising a winding tube (2) for an apron (3), one end of which is rotationally mounted on an axle section (8) designed capable of being encased in a support wing (5) and immobilized axially with respect to the latter by an axial locking device (11), wherein said axial locking device (11) is formed of a locking organ (12) designed capable of being inserted into said axle section (8), and comprising :
- withdrawable hooking means (13) capable of being elastically restored into a locking position, in which they are protruding at the periphery and at the end of said axle section (8) in order to co-operate with a side of said support wing (5) ;
- and unlocking-control means (14) for pushing said hooking means (13) into a position withdrawn with respect to the periphery of said axle section (8) and permitting the release of the latter from said support wing (5) ;
- said unlocking-control means (14) are designed so as to be accessible at the periphery of the axle section (8), on the side of the support wing (5) opposite the one, which the withdrawable hooking means (13) are designed capable of co-operating with.

2. Roller blind according to claim 1, wherein said unlocking-control means (14) are designed so as to be accessible, through at least one adapted opening (20), at the periphery of said axle section (8).

3. Roller blind according to claims 1 or 2, wherein the locking organ (12) is in the form of a V-shaped pin including two legs (15, 16) and made out of non-rigid and shape-memory material, which provides to same the characteristics of a spring.

4. Roller blind according to claim 3, wherein said locking organ (12) in the form of a pin is made of a wire of metal, plastic or composite material.

5. Roller blind according to one of claims 3 or 4, wherein said withdrawable hooking means (13) are formed of at least one hook-shaped bent end (17) of one of the legs (15, 16) of the locking organ (12) and defined capable, in locking position, of being protruding with respect to the periphery of the axle section (8).

6. Roller blind according to any of claims 3 to 5, wherein said unlocking-control means (14) consist, at least at the level of the leg (15, 16) ending in the shape of a hook (17), of a boss (19) designed capable of passing through an adapted opening (20) in the axle section (8), so as to be protruding at the periphery of the latter.

7. Roller blind according to any of the preceding claims, wherein said unlocking-control means (14) are defined so as to design, at the periphery of the axle section (8), a retaining stop (24) contributing, in co-operation with the withdrawable hooking means (13), to axially immobilizing the axle section (8) with respect to the support wing (5).

8. Roller blind according to any of the preceding claims, wherein said axle section (8) comprises at the periphery a retaining stop (24A), which by acting in co-operation with said withdrawable hooking means (13) ensures a two-directional axial immobilization of the axle section (8) with respect to the support wing (5).

9. Roller blind according to any of the preceding claims, wherein said axle section (8) comprises at least one opening (18) designed capable of receiving said withdrawable hooking means (13).

## Patentansprüche

1. Rolladen, umfassend ein Aufwickelrohr (2) für die Rolladendecke (3), dessen Ende drehbar in einer Achsensektion (8) gelagert ist, die geeignet vorgesehen ist, um in einen Stützflansch (5) hineingefügt und axial hinsichtlich dieses letzteren durch eine Axialblockiereinrichtung (11) unbeweglich gemacht zu werden, **dadurch gekennzeichnet, dass** die besagte Axialblockiereinrichtung (11) durch ein Blockierelement (12) gebildet ist, das geeignet vorgesehen ist, um in die besagte Achsensektion (8) eingefügt zu werden, und umfassend:
- elastisch rückstellbare Verhakungsmittel (13), geeignet, um elastisch nachgebend in eine Blockierposition gedrückt zu werden, in welcher sie am Außenumfang und am Endabschnitt der besagten Achsensektion (8) vorspringen, um mit einer Seitenfläche des besagten Stützflansches (5) zusammenzuwirken;
- und Mittel zum Steuern der Entsperrung (14), um die besagten Verhakungsmittel (13) in eine hinsichtlich des Außenumfangs der besagten Achsensektion (8) zurückgezogene Position zurückzudrängen und das Ausfahren dieser letzteren aus dem Stützflansch (5) zu erlauben;
- wobei die besagten Mittel zum Steuern der Entsperrung (14) derart vorgesehen sind, um auf dem Außenumfang der Achsensektion (8), von der Seite des Stützflansches (5) zugänglich zu sein, die jener entgegengesetzt ist, mit welcher die elastisch rückstellbaren Verhakungsmittel (13) geeignet vorgesehen sind, um zusammenzuwirken.

2. Rolladen nach Anspruch 1, **dadurch gekennzeichnet, dass** die besagten Mittel zum Steuern der Entsperrung (14) vorgesehen sind, um durch zumindest eine angepasste Öffnung (20) auf dem Außenumfang der besagten Achsensektion (8) zugänglich zu sein.

3. Rolladen nach den Ansprüchen 1 oder 2, **dadurch gekennzeichnet, dass** das Blockierelement (12) als eine V-förmigen Haarklemme ausgestaltet ist, die zwei Schenkel (15, 16) umfasst und aus einem nicht starren Werkstoff mit Formgedächtnis hergestellt ist, der ihm die Eigenschaften einer Feder verleiht.

4. Rolladen nach Anspruch 3, **dadurch gekennzeichnet, dass** das besagte haarklemmenartige Blockierelement (12) aus einem Draht aus Metall, Kunststoff oder Verbundwerkstoff hergestellt ist.

5. Rolladen nach einem der Ansprüche 3 oder 4, **dadurch gekennzeichnet, dass** die besagten elastisch rückstellbaren Verhakungsmittel (13) zumindest durch das eine äußerste Ende (17) des einen von den Schenkeln (15, 16) des Blockierelements (12) gebildet sind, das als Haken umgebogen und geeignet gebildet ist, um in Sperrposition hinsichtlich des Außenumfangs der Achsensektion (8) vorzuspringen.

6. Rolladen nach irgendeinem der Ansprüche 3 bis 5, **dadurch gekennzeichnet, dass** die besagten Mittel zum Steuern der Entsperrung (14) zumindest im Bereich des als Haken (17) endigenden Schenkels (15, 16) durch einen nockenartigen Vorsprung (19) gebildet sind, der geeignet vorgesehen ist, um eine angepasste Öffnung (20) in der Achsensektion (8) zu durchqueren, derart, um am Außenumfang dieser letzteren vorzuspringen.

7. Rolladen nach irgendeinem der vorgehenden Ansprüche, **dadurch gekennzeichnet, dass** die besagten Mittel zum Steuern der Entsperrung (14) derart gebildet sind, um auf dem Außenumfang der Achsensektion (8) einen Halteanschlag (24) aufzuweisen, der in Zusammenwirkung mit den elastisch rückstellbaren Verhakungsmitteln (13) dazu beiträgt, die Achsensektion (8) axial hinsichtlich des Stützflansches (5) unbeweglich zu machen.

8. Rolladen nach einem der vorgehenden Ansprüche, **dadurch gekennzeichnet, dass** die besagte Achsensektion (8) auf dem Außenumfang einen Halteanschlag (24A) umfasst, der in Zusammenwirkug mit den besagten elastisch rückstellbaren Verhakungsmitteln (13) eine axiale Unbeweglichmachung in beide Richtungen der Achsensektion (8) hinsichtlich des Stützflansches (5) sichert.

9. Rolladen nach einem der vorgehenden Ansprüche, **dadurch gekennzeichnet, dass** die besagte Achsensektion (8) zumindest eine Öffnung (18) umfasst, die geeignet vorgesehen ist, um die besagten elastisch rückstellbaren Verhakungsmittel (13) aufzunehmen.
